Europäisches Patentamt

European Patent Office

Office européen des brevets

(19)

(11) Veröffentlichungsnummer : **0 133 652**
B1

(12) **EUROPÄISCHE PATENTSCHRIFT**

(45) Veröffentlichungstag der Patentschrift :
21.01.87

(21) Anmeldenummer : 84108021.1

(22) Anmeldetag : 09.07.84

(51) Int. Cl.⁴ : **H 05 B   7/06**, F 27 D 11/10

(54) Schutzanordnung für eine Bodenelektrode eines Gleichstromlichtbogenofens.

(30) Priorität : 28.07.83 CH 4133/83

(43) Veröffentlichungstag der Anmeldung :
06.03.85 Patentblatt 85/10

(45) Bekanntmachung des Hinweises auf die Patenterteilung : 21.01.87 Patentblatt 87/04

(84) Benannte Vertragsstaaten :
AT BE CH DE FR GB IT LI SE

(56) Entgegenhaltungen :
EP-A- 0 031 482
EP-A- 0 058 817
EP-A- 0 132 711
EP-A- 0 133 925
EP-A- 0 133 926
EP-A- 0 133 931
DE-C-   426 584
FR-A- 2 292 397
FR-A- 2 381 987
US-A- 3 708 599
US-A- 3 717 713

(73) Patentinhaber : BBC Aktiengesellschaft Brown, Boveri & Cie.
Haselstrasse
CH-5401 Baden (CH)

(72) Erfinder : Bühler, Karl
Oberdorfstr. 28
CH-5415 Nussbaumen (CH)

EP 0 133 652 B1

## Beschreibung

Die Erfindung bezieht sich auf einen elektrischen Ofen nach dem Gattungsbegriff des Patentanspruchs 1. Ein derartiger Ofen ist beispielsweise aus der CH-PS-452 730 bekannt.

Die Fortschritte in der Entwicklung von Halbleiterbauelementen in den vergangenen Jahren waren Anlass dafür, Gleichstromlichtbogenöfen in zunehmendem Ausmass in der Eisen- und Stahlindustrie zur Erschmelzung, vornehmlich von Elektrostahl, einzusetzen.

Aufbau und Wirkungsweise von Gleichstromlichtbogenöfen sind beispielsweise aus der Zeitschrift « Stahl und Eisen », 103 (1983) Nr. 3, vom 14. Februar 1983, Seiten 133 bis 137 bekannt.

Zur Optimierung der elektrischen bzw. thermischen Verhältnisse hat es sich beim Gleichstromlichtbogenofen als vorteilhaft erwiesen, den Lichtbogen zwischen einer oder mehreren oberhalb des Schmelzgutes angeordneten Elektrode(n) und dem Schmelzgut selbst auszubilden. Für die Rückleitung des Gleichstromes ist mindestens eine im Boden des Ofens und mit der Schmelze in Berührung stehende Elektrode, die Bodenelektrode, vorgesehen.

Die Bodenelektrode ist einer anhaltenden sehr hohen thermischen Beanspruchung ausgesetzt, für welche sich Werkstoffe mit einem hohen Erweichungs- und Schmelzpunkt, beispielsweise Graphit, eignen. Bei Verwendung von Kohlenstoffelektroden wird aber die Schmelze einerseits aufgekohlt. Dies ist jedoch insbesondere bei der Herstellung von niedrig gekohlten Stählen unerwünscht. Andererseits wird die Kohlenstoffelektrode aufgezehrt, wodurch der Ofenboden geschwächt und die elektrische Leistungsübertragung ungünstig beeinflusst werden kann.

Nach dem Lösungsvorschlag der CH-PS-452 730 werden Bodenelektroden verwendet, deren mit der Schmelze in Verbindung stehende Zone auch dieselben chemischen Gehalte aufweist, wie die Schmelze selbst. Die Kühlung erfolgt dabei an dem dem Ofengefäss abgewandten Endbereich der Bodenelektrode durch Konvektion mit Luft, wobei dieser Endbereich aus einem Metall mit guten wärmeleitenden und stromführenden Eigenschaften, beispielsweise Kupfer, besteht. Es handelt sich hierbei um eine sogenannte Zweistoff-Bodenelektrode.

Mit dieser luftgekühlten Zweistoff-Bodenelektrode vermeidet man einerseits, dass bei einem eventuellen Durchbruch des Ofenherdes flüssiges Metall mit Flüssigkeit einer Kühlanordnung oder stromführenden Bauteilen der Bodenelektrode unterhalb des Ofengefässbodens in Kontakt treten kann und schaltet so von vornherein die Gefahr unvorhergesehener schwerwiegender Folgen aus. Andererseits muss aber ein relativ schwacher Kühleffekt in Kauf genommen werden, der den Anforderungen, die an eine Bodenelektrode im Dauerbetrieb des industriellen Einsatzes gestellt werden, keineswegs gewachsen ist, und zwar aus folgenden Gründen :

Der Betrieb eines Lichtbogenofens ist im wesentlichen durch fünf Verfahrensabläufe charakterisiert :

die Chargierphase ohne Strom ; tiefe Temperatur

die Einschmelzphase hoher Strom ; hohe Temperatur

die Frisch- oder Feinungsphase kleiner Strom ; hohe Temperatur

die Abstechphase ohne Strom ; hohe Temperatur

die Nebenzeitphasen ohne Strom ; mittlere-tiefe Temperatur

Insbesondere die in der Einschmelzphase entstehende Verlustwärme durch den Strom. hat einen grösseren Wärmefluss in der Bodenelektrode und zwar in Richtung Ofengefässboden zur Folge. Zwischen der Chargierphase und Frisch- oder Feinungsphase kann demnach die Intensität des Wärmeangebotes in einem relativ weiten Bereich variieren. D. h. aber auch, dass die in der gekühlten Zone der Bodenelektrode herrschenden Temperaturen ebenfalls in einem relativ weiten Bereich variieren. Der unterschiedliche Wärmefluss in der Bodenelektrode bedeutet bei konstanter Länge der Bodenelektrode eine unterschiedliche Temperaturdifferenz zwischen deren gekühlter und mit der Schmelze in Berührung stehender Zone. Bei grösserem Wärmeangebot ist aber keine höhere Temperaturdifferenz vorhanden, da die Elektrode auf der Innenseite nicht wärmer sein kann als die Schmelzentemperatur. Oder anders ausgedrückt, es kann mehr Wärme nur dann transportiert werden, wenn die Bodenelektrode kürzer wird, d. h. abschmilzt.

Wenn nun, wie es bei Luftkühlung in einem weiten Bereich der Fall ist, die Temperatur der Kühlfläche bei grösserem Wärmeangebot wesentlich höher ist als bei geringerem Wärmeangebot, so kann die grössere Wärmemenge nur bei noch stärker verkürzter Länge der Bodenelektrode geführt werden, d. h. die Bodenelektrode schmilzt noch mehr ab. Daraus folgt, dass sich die Lageänderung der Grenzschicht Flüssig-Fest zwischen Schmelze und Bodenelektrode über eine relativ grosse Länge — in axialer Richtung betrachtet — erstreckt. Diese Lageänderung kann sich einmal in einem « Hineinwachsen » der Bodenelektrode in die Schmelze, oder, wie bereits ausgeführt, in einem Abschmelzvorgang in Richtung Ofengefässboden, äussern.

Dieser vorstehend geschilderte Vorgang beeinträchtigt die Haltbarkeit der Bodenelektrode in erheblichem Mass und führt zu einer frühzeitigen Zerstörung der die Bodenelektrode umgebenden feuerfesten Auskleidung des Ofengefässbodens. Damit die Bodenelektrode unter derart ungünstigen Betriebsbedingungen überhaupt funktionsfähig ist, muss sie entsprechend überdimensioniert werden. Dies wiederum beeinflusst die Verlustleistung in nachteiliger Weise.

Darüber hinaus ist Kühlerleistung den betrieblichen Erfordernissen anzupassen. Diese kann einmal erhöht werden, durch eine Ueberdimensionierung eines Luftkühlers. Dies würde jedoch auf die Dauer zu unbefriedigenden Ergebnissen führen.

Andererseits bietet sich eine Flüssigkeitskühlung in hervorragender Weise für die Kühlung einer Bodenelektrode an. Hierbei müssen aber entsprechende Schutzvorkehrungen getroffen werden, damit flüssiges Metall nicht mit Kühlflüssigkeit in Berührung kommt.

Aus der CH-PS-596 526 ist eine Bodenelektrode mit Flüssigkeitskühlung bekannt, bei der jedoch die Flüssigkeitskühlvorrichtung sich durch den Ofengefässboden hindurch, weit bis in das Ofeninnere hinein erstreckt.

Diese Anordnung beinhaltet eine erhebliche Gefahr, dass flüssiges Metall mit Kühlflüssigkeit in Berührung kommt, insbesondere dann, wenn die feuerfeste Auskleidung des Ofengefässbodens von Schmelze infiltriert ist.

Der Erfindung liegt die Aufgabe zugrunde, einen elektrischen Ofen der eingangs genannten Art zu schaffen, bei dem die Bodenelektrode ausreichend vor austretendem flüssigen Metall bei eventuellen unvorhergesehenen Durchbrüchen des Ofengefässbodens geschützt ist und dadurch ein hohes Mass an betrieblicher Sicherheit bei der Ofenführung gewährleistet ist.

Die Lösung dieser Aufgabe erfolgt durch die im Patentanspruch 1 gekennzeichnete Erfindung.

Hierdurch wird verhindert, dass bei einem eventuellen Durchbruch des Ofengefässbodens in der Nähe der Bodenelektrode das austretende flüssige Metall an die gekühlten Teile der Bodenelektrode gelangen kann, und abgeleitet wird.

Darüber hinaus dient das Abschirmdach zum Schutz der Zuleitungsrohre und -schläuche für die Kühlanordnung sowie für die elektrischen Stromzuleitungen etc. Hierbei kann die Bodenelektrode entweder direkt mit Kühlflüssigkeit oder indirekt durch die Kontaktflächen einer separaten Kühlvorrichtung gekühlt werden.

Bei einer Weiterbildung des Erfindungsgegenstandes gemäss Anspruch 2 und 3 besteht das Abschirmdach aus Metall oder mindestens teilweise aus feuerfestem Material, es ist kegelstumpfartig ausgebildet und mit einer Oeffnung versehen, das Abschirmdach ist nach unten offen und die Bodenelektrode ragt durch die Oeffnung des Abschirmdaches hindurch.

Darüber hinaus ist vorzugsweise mindestens die obere Fläche des Abschirmdaches mit einem Belag aus feuerfestem Werkstoff versehen. Diese konstruktive Anordnung ermöglicht einen einfachen Aufbau der Schutzvorrichtung und bietet ausserdem die Gewähr dafür, dass selbst bei grösseren Mengen austretenden flüssigen Metalls aus dem Ofengefässboden die Kühlanordnung und die elektrischen Anschlussteile der Bodenelektrode ausreichend geschützt sind.

Die Erfindung wird nachstehend anhand eines Ausführungsbeispieles in der Zeichnung näher erläutert. Es zeigt :

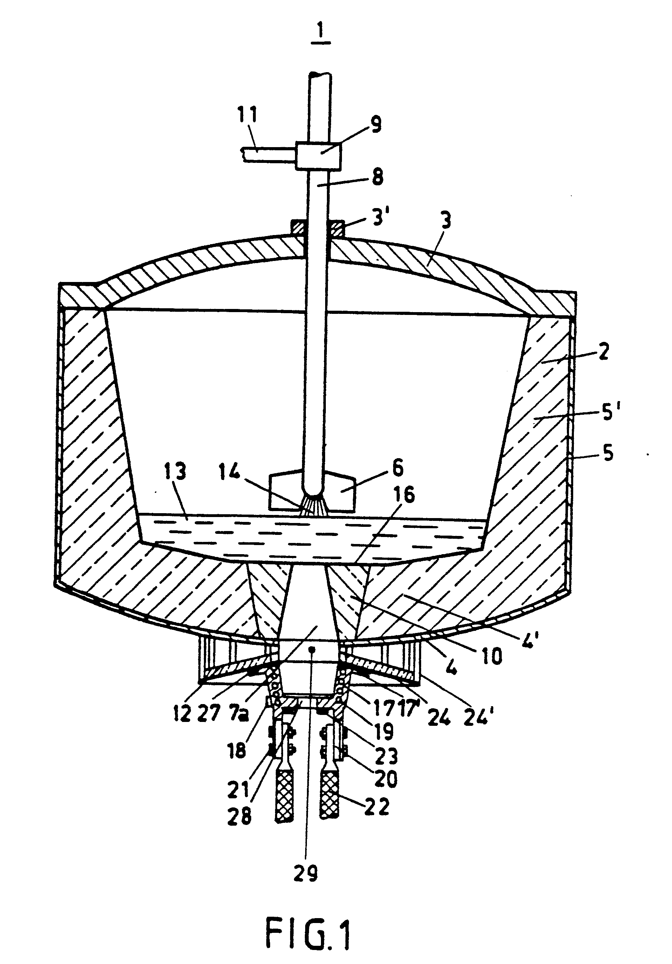

Figur 1    einen Vertikalschnitt durch den elektrischen Ofen mit einem Ausführungsbeispiel der erfindungsgemässen Bodenelektrode.

Fig. 1 zeigt den Lichtbogenofen 1 mit Ofengefäss 2 und Ofendeckel 3, wobei das Ofengefäss 2 aus dem Gefässboden 4, der Gefässwand 5, der feuerfesten Auskleidung des Ofenbodens 4', sowie der feuerfesten Auskleidung der Gefässwand 5' besteht. Oberhalb des Schmelzbades 13 ist eine Kohlenstoffelektrode 8 angeordnet, welche durch eine Oeffnung des Ofendeckels 3 hindurchragt. Zur Kühlung der Elektrode 8 ist ein Kühlring 3' angeordnet. Die Elektrode 8 ist in einer Halterung 9 eines Elektrodentragarmes 11 gehalten. Der Elektrodentragarm 11 ist wiederum mit einer in Fig. 1 nicht dargestellten Elektrodenregul025iereinrichtung verbunden.

In dem Ofengefäss 5, 5' befindet sich eine Ofentür 6 und zwischen der Elektrode 8 und dem Schmelzbad 13 ist ein Lichtbogen 14 ausgebildet.

Im Gefässboden 4, 4' ist die erfindungsgemässe Bodenelektrode 7a zu sehen, welche von dem sie ergänzenden Teil 10 aus feuerfestem Werkstoff hülsenartig umschlossen ist. In der beispielsweisen Ausführungsform gemäss Fig. 1 weist die Bodenelektrode 7a eine konische, sich in Richtung des Gefässinneren verjüngende Form auf, welche sich vom Ofengefässboden 4 bis zur Ofenherdfläche 16 erstreckt. Im Gegensatz zur sich verjüngenden Gestalt der Bodenelektrode 7a, erweitert sich der sie ergänzende Teil 10 in Richtung des Gefässinneren hin. Die Bodenelektrode 7a wird unterhalb des Ofengefässbodens 4 durch ein wassergekühltes, als Kontakthülse ausgebildetes Anschlussstück 17 gehalten, welches gleichzeitig zur Verbindung der elektrischen Stromzuführung dient. Die Bodenelektrode 7a ist mittels einer Schraubverbindung 23 an der Stirnfläche des Anschlussstückes 17 befestigt. Die Bodenelektrode 7a liegt mit ihren konisch ausgebildeten Kontaktflächen an den ebenfalls konischen, zum Ofenboden 3 hin sich erweiternden inneren Kontaktflächen der Kontakthülse an, wodurch eine gute elektrische Verbindung und Wärmeleitung zwischen beiden Teilen 7a und 17 hergestellt wird. An dem Anschlussstück 17 sind Kontaktlaschen 20 angeordnet, die einstückig mit der Kontakthülse ausgebildet sind.

In Fig. 1 ist ein Teil des elektrischen Stromzuführungskabels 22 zu sehen, das mittels Schraubverbindung 21 mit den Kontaktlaschen 20 des Anschlussstückes 17 verbunden ist. Das Anschlussstück 17 ist mit gegen die Elektrode 7a verschlossenen Kühlkanälen 19 sowie mit einem Kühlkanaleintrittsstutzen 18 versehen. Eine Kühlflüssigkeit, vornehmlich Wasser, wird durch den Eintrittsstutzen 18 den Kühlkanälen 19 zugeführt. Es durchströmt die Kühlkanäle 19 des Anschlussstückes 17 in spiralförmiger Anordnung aufwärts und kühlt somit die Bodenelektrode 7a auf indirekte Weise. Der Kühlflüssigkeitsaustrittsstutzen des Anschlussstückes 17 befindet sich auf der gleichen Ebene wie der Eintrittsstutzen 18 und ist deshalb in Fig. 1 nicht zu sehen.

Die Halterung der Bodenelektrode 7a geschieht mittels eines Befestigungsteiles, welche aus einem metallischen kegelstumpfartigen Abschirmdach 24 und vertikalen Haltetraversen 24′ besteht, wobei das Abschirmdach 24 in bezug auf die Ofenachse mindestens im wesentlichen zentral und nach unten offen angeordnet und mittels der Haltetraversen 24′ mit dem Ofengefässboden 4 fest verbunden ist. Die Bodenelektrode 7a ragt durch die Oeffnung des Abschirmdaches hindurch und stützt sich auf der Kontakthülse ab, wobei das Anschlussstück 17 unter Einfügung einer elektrisch isolierenden Zwischenschicht 27 an der Unterseite des Abschirmdaches 24 befestigt ist.

Bei einer allfälligen Demontage der Bodenelektrode wird nur die Verschraubung 23 gelöst. An die, dem Gefässinneren abgewandten Stirnfläche der Bodenelektrode 7a wird beispielsweise ein in Fig. 1 nicht dargestellter Bolzen einer Auspressvorrichtung durch den Durchbruch 28 in der Stirnfläche 28 des Anschlussstückes 17 auf die Stirnfläche der Bodenelektrode 7a aufgesetzt und auf die Bodenelektrode 7a, mitsamt dem sie ergänzenden Teil 10 eine für den Ausstossvorgang erforderliche Kraft aufgebracht. Auf diese Weise kann die Bodenelektrode mitsamt dem sie umhüllenden Teil 10 leicht von aussen in das Ofengefässinnere hinein entfernt werden. Da im Gegensatz zu der, der Schmelze zugewandten Stirnfläche der Bodenelektrode die Stirnfläche auf der der Auspressstempel anliegt, genau definiert ist, so kann die Auspressung der Bodenelektrode aus dem Ofengefässboden 4, 4′ in jedem Fall gut reproduzierbar wiederholt werden.

**Patentansprüche**

1. Elektrischer Ofen, insbesondere Gleichstromlichtbogenofen zum Schmelzen von Metallen mit einer Flüssigkeitskühlvorrichtung für die Bodenelektrode (7a) unterhalb des Ofengefässbodens (4), dadurch gekennzeichnet, dass zwischen Ofengefässboden (4) und Flüssigkeitskühlvorrichtung ein Abschirmdach (24) als Schutz gegen eventuell durch den Ofengefässboden (4) hindurchtretendes flüssiges Metall angeordnet ist.

2. Elektrischer Ofen nach Anspruch 1, dadurch gekennzeichnet, dass das Abschirmdach (24) kegelstumpfartig ausgebildet und mit einer Oeffnung versehen ist, dass das Abschirmdach (24) nach unten offen und dass die Bodenelektrode (7a) durch die Oeffnung des Abschirmdaches (24) hindurchragt.

3. Elektrischer Ofen nach Anspruch 1 oder 2, dadurch gekennzeichnet, dass mindestens die obere Fläche des Abschirmdaches (24) aus feuerfestem Werkstoff (12) besteht.

4. Elektrischer Ofen nach einem der Ansprüche 1 bis 3, dadurch gekennzeichnet, dass die Halterung der Bodenelektrode (7a) an der dem Ofengefässboden abgewandten Fläche des Abschirmdaches (24) erfolgt, welche Halterung ein Anschlussstück (17) aufweist, das unter Einfügung einer elektrisch isolierenden Zwischenschicht (27) and der Unterseite des Abschirmdaches (24) befestigt ist.

**Claims**

1. Electric furnace, in particular a direct-current arc furnace, for fusing metals, having a liquid-cooling device for the bottom electrode (7a) underneath the bottom (4) of the furnace vessel, characterized in that, between the bottom (4) of the furnace vessel and the liquid-cooling device, a screening roof (24) is provided as a protection against molten metal which might penetrate through the bottom (4) of the furnace vessel.

2. Electric furnace according to Claim 1, characterized in that the screening roof (24) has the shape of a truncated cone and is provided with an opening, that the screening roof (24) is open downwards and that the bottom electrode (7a) protrudes through the opening in the screening roof (24).

3. Electric furnace according to Claim 1 or 2, characterized in that at least the upper surface of the screening roof (24) consists of a refractory material (12).

4. Electric furnace according to one of Claims 1 to 3, characterized in that the bottom electrode (7a) is mounted on that surface of the screening roof (24) which faces away from the bottom of the furnace vessel, the mounting having a connector (17) which, with insertion of an electrically insulating interlayer (27), is fixed to the underside of the screening roof (24).

**Revendications**

1. Four électrique, en particulier four à arc électrique à courant continu pour la fusion de métaux, avec un dispositif de refroidissement par un liquide pour l'électrode de fond (7a) sous le fond (4) de la cuve du four, caractérisé en ce qu'entre le fond (4) de la cuve du four et le dispositif de refroidissement par un liquide est disposé un plafond de protection (24) à titre de protection contre du métal liquide passant accidentellement à travers le fond (4) de la cuve du four.

2. Four électrique suivant la revendication 1, caractérisé en ce que le plafond de protection (24) a la forme d'un tronc de cône et est pourvu d'une ouverture, en ce que le plafond de protection (24) est ouvert vers le bas et en ce que l'électrode de fond (7a) passe à travers l'ouverture du plafond de protection (24).

3. Four électrique suivant la revendication 1 ou 2, caractérisé en ce qu'au moins la face supérieure du plafond de protection (24) consiste en matériau réfractaire (12).

4. Four électrique suivant l'une des revendications 1 à 3, caractérisé en ce que le maintien de l'électrode de fond (7a) est réalisé à la face du plafond de protection (24) qui n'est pas tournée vers le fond de la cuve du four, ledit maintien comportant une pièce de raccordement (17) qui est fixée à la face inférieure du plafond de protection (24) avec interposition d'une couche intermédiaire (27) électriquement isolante.

FIG.1